# EUROPÄISCHE PATENTSCHRIFT

(11) **EP 0 738 838 B1**
(45) Veröffentlichungstag und Bekanntmachung des Hinweises auf die Patenterteilung: **21.11.2001**
(21) Anmeldenummer: 96104382.5
(22) Anmeldetag: 20.03.1996
(51) Int. Cl.: F16F 7/00, F16B 5/06, F16B 21/02, E05F 5/06, F16B 5/02

(54) **Selbstjustierender Dämpfungsanschlag für bewegliche Teile**
Self-adjustable stop with damping,for movable parts
Butée auto-réglée à amortissement pour éléments déplaçables

(30) Priorität: 22.04.1995 DE 19514944
(43) Veröffentlichungstag der Anmeldung: 23.10.1996
(73) Patentinhaber: ITW-ATECO GmbH, D-22844 Norderstedt (DE)
(72) Erfinder: Stöcker, Jürgen, 97249 Eisingen (DE); Wibrow, Günter, 22844 Norderstedt (DE)
(74) Vertreter: Patentanwälte Hauck, Graalfs, Wehnert, Döring, Siemons

(56) Entgegenhaltungen:
- EP-A- 0 611 868
- DE-A- 3 401 427
- DE-A- 3 801 892
- DE-A- 4 011 186
- DE-A- 4 340 114
- FR-A- 2 565 649
- FR-A- 2 705 308
- US-A- 3 675 531
- US-A- 4 653 968
- US-A- 4 924 549
- US-A- 5 092 550
- US-A- 5 131 115
- US-A- 5 482 348

## Beschreibung

Die Erfindung bezieht sich auf einen selbstjustierenden Dämfungsanschlag für bewegliche Teile, insbesondere für Klappen an Automobilen oder dergleichen nach dem Oberbegriff des Patentanspruchs 1.

Bewegliche Teile an Automobilen, die normalerweise festgelegt werden, wie zum Beispiel Motorhaube, Heckklappe oder dergleichen, werden üblicherweise dämpfend gelagert, um bei Erschütterungen und Vibrationen Klappergeräusche zu unterbinden. Es ist auch bereits bekannt, pufferartige Anschlagelemente vorzusehen, gegen die sich zum Beispiel eine Klappe oder Haube im geschlossenen Zustand anlegt. Sowohl die Klappe als auch der pufferförmige Anschlag sind mit Toleranzen behaftet. Es kann daher geschehen, daß aufgrund dieser Toleranzen das bewegliche Teil nicht ausreichend am Dämpfungselement anliegt oder umgekehrt nicht oder schwer in Schließstellung gebracht werden kann, da das Dämpfungselement zu weit heraussteht. Es ist daher erforderlich, bei derartigen Dämpfungsanschlägen eine Verstellbarkeit vorzusehen, damit das Dämpfungselement die gewünschte Lage relativ zum jeweilig zu dämpfenden Teil einnimmt. Derartige Justageoperationen sind jedoch verhältnismäßig zeitaufwendig.

Aus US 4 924 549 ist ein Dämpfungsanschlag mit einem Anschlagelement, das einen Kopf und einen Schaft aufweist, mit einem Gehäuse, das zur Befestigung an dem zu dämpfenden Teil vorgesehen ist und eine Aufnahmeöffnung besitzt, und mit einem Klemmelement im Gehäuse bekannt, das einen Klemmabschnitt aufweist, der mit dem Schaft des Anschlagelements zusammenwirkt.

Der Erfindung liegt daher die Aufgabe zugrunde, einen selbstjustierenden Dämpfungsanschlag für bewegliche Teile, insbesondere von Klappen von Automobilen, zu schaffen, der einfach montiert werden kann und der ein Nachjustieren erübrigt.

Diese Aufgabe wird durch die Merkmale des Patentanspruchs 1 gelöst.

Erfindungsgemäß sitzt der Schaft eines Dämpfungselements in einem Gehäuse, das in geeigneter Weise am zu dämpfenden Teil anbringbar ist. Im Gehäuse ist ein Klemmelement angeordnet, das einen Klemmabschnitt aufweist. Der Klemmabschnitt wirkt mit dem Schaft des Dämpfungselements zusammen. Der Schaft des Dämpfungselements kann in einer relativ beliebigen Lage vom Klemmelement erfaßt und festgelegt werden. Das Klemmelement wirkt seinerseits mit einem Mitnehmerelement zusammen, das an der Außenseite des Gehäuses drehbar gelagert ist und eine Durchgangsöffnung für den Schaft des Dämpfungselements aufweist. Das Mitnehmerelement weist eine Rampen- oder Steuerfläche auf, die mit dem Klemmabschnitt so zusammenwirkt, daß bei einer Drehung des Mitnehmerelements der Klemmabschnitt mit dem Schaft des Pufferelements klemmend zusammenwirkt.

Beim Einbau des Pufferelements steht es ein maximal zulässiges Maß aus dem Gehäuse heraus. Beim Schließen des zu dämpfenden Teils, beispielsweise einer Heckklappe, wird das Dämpfungselement weiter in das Gehäuse eingedrückt. Nach dem Öffnen des Teils kann durch Drehen des Mitnehmers der Klemmabschnitt mit dem Schaft verklemmt werden, so daß der Schaft und damit das Pufferelement axial im Gehäuse festgelegt ist. Ein weiteres Justieren ist nicht erforderlich. Vielmehr zeichnet sich der erfindungsgemäße Dämpfungsanschlag dadurch aus, daß er durch ein einmaliges Schließen und Öffnen des zu dämpfenden Teils auf Einbauhöhe eingestellt und durch anschließendes Verriegeln arretiert werden kann.

Um in der beschriebenen Weise Vibrier- oder Klappergeräusche zu unterbinden, ist es vorteilhaft, wenn eine gewisse Vorspannung erzeugt wird derart, daß beim Schließen des zu dämpfenden Teils eine gewisse Gegenkraft am Pufferelement überwunden werden muß. Es versteht sich, daß in diesem Fall das Pufferelement einen elastomeren Abschnitt aufweist, der beim Schließen des Teils etwas nachgibt. In diesem Zusammenhang sieht eine Ausgestaltung der Erfindung vor, daß das Klemmelement drehbar im Gehäuse angeordnet ist und an dem der Aufnahmeöffnung gegenüberliegenden Ende mit einem Steuerabschnitt versehen ist, der mit einem entsprechenden Steuerabschnitt des Gehäuses zusammenwirkt derart, daß bei einer Drehung des Klemmelements dieses axial in Richtung der Aufnahmeöffnung bewegt wird. Mit dieser Bewegung des Klemmelements können zwei Funktionen erfüllt werden. Zum einen kann der Klemmabschnitt gegen eine konische Nockenfläche des Mitnehmers gepreßt werden, damit ein Einklemmen des Schaftes des Pufferelements stattfindet. Des weiteren wird durch die axiale Bewegung des Klemmelements der Puffer ein bestimmtes Maß aus dem Gehäuse herausbewegt, um die notwendige Vorspannung (durch Übermaß) zu erzeugen.

Nach einer Ausgestaltung der Erfindung kann das Mitnehmerelement an der Außenseite eine Schlüsselfläche aufweisen, beispielsweise in Form eines Sechskants, der einteilig angeformt ist. Hierbei sei angemerkt, daß sowohl das Mitnehmerelement als auch die übrigen Teile vorzugsweise aus einem geeigneten Kunststoffmaterial geformt sind.

Für die drehbare Lagerung des Mitnehmerelements am Gehäuse kann nach einer Ausgestaltung der Erfindung eine Ringnut vorgesehen sein, in die ein Vorsprung des Gehäuses bzw. im Bereich der Aufnahmeöffnung eingreift. Um diesen Eingriff zu bewerkstelligen, weist die Ringnut eine Ausnehmung auf, durch die der radiale Vorsprung in die Ringnut eingreifen kann. Auf der Außenseite des Gehäuses greift der Mitnehmer vorzugsweise über einen Flansch am Gehäuse an.

Nach einer anderen Ausgestaltung der Erfindung ist der Mitnehmerabschnitt mit mehreren achsparallelen Beinen versehen, die im wesentlichen formschlüssig zwischen achsparallelen Klemmabschnitten des Klemmelements angeordnet sind. Die Klemmabschnitte des Klemmelements dienen daher zum einen als elastische Abschnitte zum klemmenden Eingriff mit dem Schaft des Pufferelements und zum anderen als Mitnahmeabschnitte bei der Verdrehung des Mitnehmerelements. Zur Erzielung der Axialbewegung des Klemmelements weist der Steuerabschnitt des Gehäuses vorzugsweise Rampenabschnitte auf, die mit Rampenabschnitten des Klemmelements zusammenwirken.

Im Bereich des Steuerabschnitts weist das Klemmelement vorzugsweise mindestens einen Anschlag auf, der mit einem Gegenanschlag des Gehäuses im Bereich des Steuerabschnitts so zusammenwirkt, daß die Drehung des Klemmelements begrenzt ist, wenn es bei einem vorgegebenen Drehwinkel seine maximale Auslenkung erreicht hat. Dadurch ist sichergestellt, daß das Klemmelement bei einer weiteren Drehung nicht wieder in die entgegengesetzte Richtung aufgrund der aufgebrachten axialen Spannung verstellt wird.

Das Pufferelement weist vorzugsweise einen relativ festen Kern auf, der im Bereich des Kopfes mit einer elastomeren Schicht versehen ist. Vorzugsweise ist auch am Schaft ein elastomerer Bereich vorgesehen, mit dem der Klemmabschnitt des Klemmelements zusammenwirkt, um eine höhere kraftschlüssige Klemmkraft zu erreichen.

Ausführungsbeispiele der Erfindung werden nachfolgend anhand von Zeichnungen näher erläutert.
- Fig. 1: zeigt einen Schnitt durch einen Anschlag nach der Erfindung.
- Fig. 2: zeigt die Draufsicht auf das Gehäuses des Anschlags nach Fig. 1.
- Fig. 3: zeigt einen Schnitt durch die Darstellung nach Fig. 2 entlang der Linie 3-3.
- Fig. 4: zeigt einen Schnitt durch die Darstellung nach Fig. 2 entlang der Linie 4-4.
- Fig. 5: zeigt eine Draufsicht auf das Klemmelement des Anschlags nach Fig. 1.
- Fig. 6: zeigt einen Schnitt durch die Darstellung nach Fig. 5 entlang der Linie 6-6.
- Fig. 7: zeigt einen Schnitt durch die Darstellung nach Fig. 5 entlang der Linie 7-7.
- Fig. 8: zeigt die Druntersicht unter die Darstellung nach Fig. 6.
- Fig. 9: zeigt eine Draufsicht auf das Mitnehmerelement des Anschlags nach Fig. 1.
- Fig. 10: zeigt einen Schnitt durch die Darstellung nach Fig. 9 entlang der Linie 10-10.
- Fig. 11: zeigt einen Schnitt durch die Darstellung nach Fig. 10 entlang der Linie 11-11.

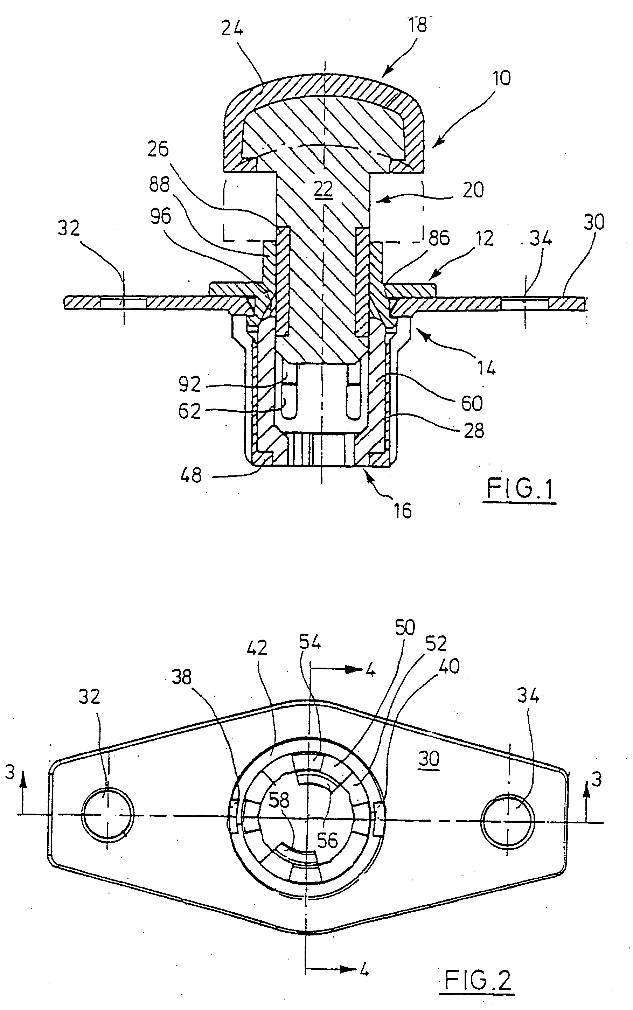

Das in Fig. 1 gezeigte Anschlagsystem besteht aus vier Teilen, nämlich einem Pufferelement 10, einem Mitnehmerelement 12, einem Gehäuse 14 und einem Klemmelement 16. Bis auf das Pufferelement 10 sind die übrigen Teile in weiteren Figuren dargestellt.

Das Pufferelement weist einen Kopf 18 auf sowie einen Schaft 20. Kopf und Schaft weisen einen relativ festen Kern 22 aus einem geeigneten Kunststoffmaterial auf. Der Kopf 18 ist mit einem geeigneten elastomeren Material 24 beschichtet. Ein ähnliches Material ist in Form eines Ringes 26 in den Schaft 20 eingebettet.

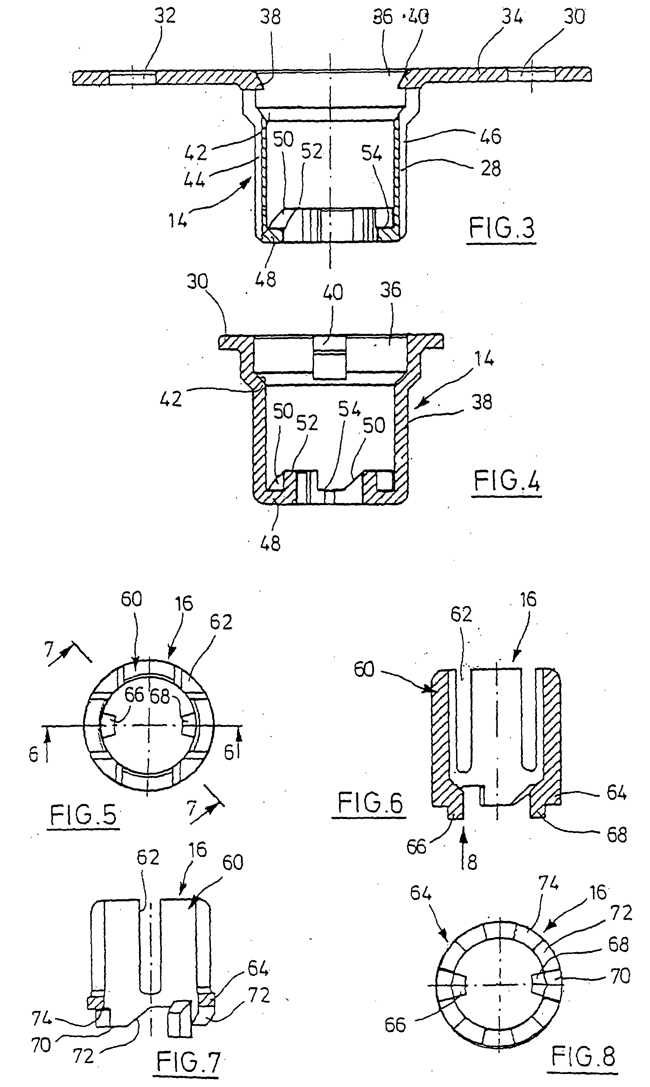

Das Gehäuse 14 weist einen topfförmigen Teil 28 und einen Flansch 30 auf. Der längliche Flansch 30, der am offenen Ende des topfförmigen Teils 28 angeformt ist, weist in beiden Endbereichen eine Öffnung 32 bzw. 34 auf. Sie dient zur Befestigung des Gehäuses 14 zum Beispiel an einem Deckel für einen Kofferraum oder an einer Haube eines Automobils. Wie aus den Figuren 3 und 4 zu erkennen, weist der zylindrische topfförmige Teil 28 im Bereich einer Aufnahmeöffnung 36 zwei diametral gegenüberliegende Vorsprünge 38, 40 auf, die radial nach innen weisen und von oben nach unten radial schräg nach innen verlaufen. Unterhalb der Vorsprünge 38, 40 ist eine konische ringförmige Schulter 42 geformt. Zu Formungszwecken der Vorsprünge 38, 40 weist das Teil 38 diametral gegenüberliegend Nuten 44, 46 (Fig. 3) unterhalb der Vorsprünge 38, 40 auf. Für die Funktion des beschriebenen Systems sind die Nuten nicht von Bedeutung.

Der Boden 48 des topfförmigen Teils 38 ist in der Mitte teilweise geöffnet. Am Rand sind Steuerabschnitte vorgesehen, und zwar vier an der Zahl über jeweils 90° Umfangserstreckung. Sie bestehen aus einem Rampenabschnitt 50, einem erhabenen Abschnitt 52 und einem abgesenkten Abschnitt 54. Der Rampenabschnitt 50 erstreckt sich vom abgesenkten Abschnitt 54 schräg zum erhabenen Abschnitt 52. An den erhabenen Abschnitt 52 schließt sich im Uhrzeigersinn wieder ein abgesenkter Abschnitt 54 an usw. Radial innerhalb der beschriebenen Abschnitte sind diametral gegenüberliegend Anschlagabschnitte 56, 58 geformt. Wie aus Fig. 1 zu erkennen, ist das Klemmelement 16 an der Außenseite so geformt, daß es komplementär mit dem Inneren des topfförmigen Teils 28 ist. Vier um 90° versetzte Beine 60, die zwischen sich einen Spalt 62 bilden, dienen als Klemmabschnitt. Die Beine 60 sind innen und außen kreisbogenförmig begrenzt. Der Querschnitt der Zwischenräume 62 ist trapezförmig (Fig. 5). Die Beine 60 sind am unteren Ende einteilig mit einem Ringabschnitt 64 geformt, an den zwei diametral gegenüberliegende radial nach innen weisende Anschlagabschnitte 66, 68 geformt sind. Wie aus Fig. 8 hervorgeht, ist die Unterseite des ringförmigen Abschnitts 60 in vier Steuerabschnitte unterteilt, die jeweils sich um 90° in Umfangsrichtung erstrecken. Sie weisen einen erhabenen Abschnitt 70, einen Rampenabschnitt 72 und einen abgesenkten Abschnitt 74 auf. Der Rampenabschnitt 72 erstreckt sich vom abgesenkten Abschnitt 74 schräg zum erhabenen Abschnitt 70. An den erhabenen Abschnitt 70 schließt sich in Uhrzeigerrichtung wieder ein abgesenkter Abschnitt 74 an usw.

Die Steuerabschnitte des Klemmelements 16 sind komplementär zu denen des Bodens des topfförmigen Abschnitts 28 des Gehäuses 14. Dies jedoch nur in einer bestimmten Drehlage des Klemmelements 40. Wird das Klemmelement in dieser Position im Uhrzeigersinn verdreht, wandern die Rampenabschnitte 72 des Klemmelements 16 auf den Rampenabschnitten 15 des Gehäuses 14, so daß das Klemmelement 16 axial in Richtung Aufnahmeöffnung 36 des Gehäuses 14 verschoben wird. Diese Verschiebung wird bei Drehung des Klemmelements 14 so lange fortgesetzt, bis die erhabenen Abschnitte 70 des Klemmelements auf den erhabenen Abschnitten 52 des Gehäuses 14 aufliegen. Eine weitere Drehung wird durch die Anschlagabschnitte 56, 58 bzw. 66, 68 verhindert.

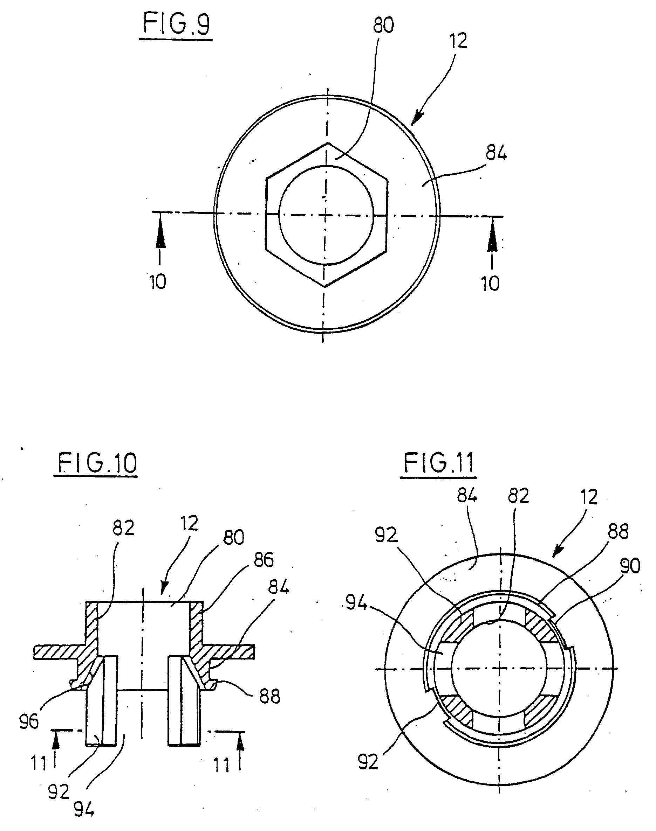

Das Mitnehmerelement 12 weist im oberen Bereich einen Sechskantabschnitt 80 auf, der von einem Schlüssel erfaßt werden kann. Innerhalb des Sechskants ist eine zylindrische Bohrung 82 vorgesehen. Am unteren Ende des Sechskantsabschnitt 80 ist ein kreisförmiger Flansch 84 angeformt. Unterhalb des Flansches befindet sich ein zylindrischer Abschnitt, der eine ringförmige Nut 86 bildet, die oben vom Flansch 84 und unten von einer ringförmigen Rippe 88 begrenzt ist. Wie aus Fig. 11 hervorgeht, ist die Rippe an diametral gegenüberliegenden Punkten durch Ausnehmungen 90, 92 unterbrochen. Wie ferner aus den Figuren 10 und 11 hervorgeht, sind im unteren Bereich vier um 90° versetzte achsparallele Beine 92 geformt, die achsparallele Spalte 94 zwischen sich bilden. Die Beine 92 sind so geformt, daß sie passend in die Spalte 62 des Klemmelements 16 eingeführt werden können, wie in Fig. 1 gezeigt. Zwischen den Beinen 92 sind kreisbogenförmig sich erstreckende konische Rampenflächen 96 geformt.

Bei der Montage des Anschlagsystems nach Fig. 1 wird zunächst das Klemmelement 16 in das Gehäuse 14 eingesetzt mit komplementärer Anlage der Steuerabschnitte von Gehäuse 14 und Klemmelement 16 aneinander. Anschließend wird das Mitnehmerelement 12 in die Öffnung 36 des Gehäuses 14 eingeführt, und zwar derart, daß die Ausnehmungen 90, 92 zu den radialen Vorsprüngen 38, 40 des Gehäuses ausgerichtet sind. Dadurch gelangen die Vorsprünge 38, 40 in den Bereich der Nut 86. Wird das Mitnehmerelement anschließend gedreht, laufen die Vorsprünge 38, 40 in der Nut 86. Bei dem Einführen des Mitnehmerelements 12 wurde darauf geachtet, daß zunächst die Beine 92 in die Spalte 62 des Klemmelements 16 eingeführt werden. Danach wird der Schaft 20 des Pufferelements 10 über die Bohrung 82 des Mitnehmerelements 12 in das Klemmelement 16 eingeschoben. Der Außenumfang des Schaftes 20 entspricht annähernd der inneren Begrenzung des durch die Beine 60 gebildeten Klemmabschnitts. Der Schaft 20 wird jedoch nur teilweise eingeschoben, wie in Fig. 1 dargestellt. In dieser Position wird das System bei fest montiertem Gehäuse 12 automatisch justiert. Hierzu wird dann die Klappe geschlossen, so daß der Kopf 18 des Pufferelements 10 automatisch an eine Gegenanlage gelangt. Dabei wird das Pufferelement 10 in das Gehäuse 14 eingedrückt, wie gestrichelt in Fig. 1 dargestellt. Anschließend wird die Klappe wieder geöffnet und mit Hilfe eines Schlüssel, der am Sechskant 80 angreift, der Mitnehmer 12 im Uhrzeigersinn um einen gewissen Betrag gedreht, bis die erhabenen Abschnitte von Klemmelement 40 und Gehäuses 14 übereinanderliegen. Bei dieser Bewegung gleiten die oberen abgerundeten Enden der Beine 60 des Mitnehmerelements 16 entlang der konischen Abschnitte 96 des Mitnehmerelements 12 und werden radial nach innen gebogen in klemmenden Eingriff mit dem Schaft 20 des Pufferelements 10. Aufgrund der axialen Bewegung des Klemmelements 16 wird das Pufferelement 10 automatisch eine bestimmte Strecke mitgenommen und wieder nach außen zurückverstellt. Auf diese Weise wird für das Anschlagsystem eine Vorspannung erhalten.

## Patentansprüche

1. Selbstjustierender Dämpfungsanschlag für bewegliche Teile, insbesondere für Klappen, Hauben oder dergleichen in Automobilen, mit
einem Anschlagelement (10), das einen Kopf (18) und einen Schaft (20) aufweist,
einem Gehäuse (14), das Mittel zur Befestigung an dem zu dämpfenden Teil und eine Aufnahmeöffnung (36) aufweist,
einem Klemmelement (16) im Gehäuse (14), das einen radial beweglichen oder verformbaren Klemmabschnitt (60) aufweist, der klemmend mit dem Schaft (20) des Anschlagelements (10) zusammenwirkt, der über die Aufnahmeöffnung (36) in das Gehäuse (14) einführbar ist,
**dadurch gekennzeichnet, daß** ein Mitnehmerelement (12) vorgesehen ist, das im Bereich der Aufnahmeöffnung (36) drehbar am Gehäuse (14) gelagert ist, einen Durchgang (82) für den Schaft (20) des Anschlagelements (10) aufweist sowie Rampenflächen (86), die mit dem Klemmabschnitt (60) zusammenwirken derart, daß bei Drehung des Mitnehmerelements (12) der Klemmabschnitt (60) mit der Rampenfläche (96) zusammenwirkt und gegen den Schaft (20) angepreßt wird, um diesen axial fest im Gehäuse (14) einzuklemmen.

2. Anschlag nach Anspruch 1, **dadurch gekennzeichnet, daß** das Gehäuse (14) an dem der Aufnahmeöffnung (36) gegenüberliegenden Ende einen Steuerabschnitt (50, 52, 54) aufweist, mit dem ein Steuerabschnitt (70, 72, 74) des drehbar im Gehäuse (14) gelagerten Klemmelements (16) so zusammenwirkt, daß das Klemmelement (16) bei Drehung axial bewegt wird, das Mitnehmerelement (12) einen Mitnehmerabschnitt (92) aufweist, über den das Klemmelement (16) verdreht wird, wenn das Mitnehmerelement (12) gedreht wird und der Rampenabschnitt (96) des Mitnehmerelements (12) von einer konischen Fläche gebildet ist.

3. Anschlag nach Anspruch 1 oder 2, **dadurch gekennzeichnet, daß** an der Außenseite des Mitnehmerelements (12) eine Schlüsselfläche (80) angeformt ist.

4. Anschlag nach einem der Ansprüche 1 bis 3, **dadurch gekennzeichnet, daß** im Mitnehmerelement (12) eine Ringnut (86) vorgesehen ist, die von mindestens einer Ausnehmung (90, 92) unterbrochen ist, das Gehäuse (14) einen radialen Vorsprung (38, 40) aufweist, der in die Ringnut (86) eingreift, wenn dieser über die Ausnehmung (90, 92) eingeführt ist, wobei die eine Seite der Ringnut (86) von einem Flansch (84) begrenzt wird, der an der Außenseite des Gehäuses (14) anliegt.

5. Anschlag nach einem der Ansprüche 2 bis 4, **dadurch gekennzeichnet, daß** der Mitnehmerabschnitt von mehreren achsparallelen Beinen (92) gebildet ist, die im wesentlichen formschlüssig zwischen achsparallelen Klemmabschnitten (60) des Klemmelements (16) angeordnet sind.

6. Anschlag nach einem der Ansprüche 2 bis 5, **dadurch gekennzeichnet, daß** der Steuerabschnitt des Gehäuses (14) Rampenabschnitte (52) aufweist, die mit Rampenabschnitten (72) des Klemmelements (16) zusammenwirken.

7. Anschlag nach einem der Ansprüche 2 bis 6, **dadurch gekennzeichnet, daß** das Klemmelement (16) im Bereich des Steuerabschnitts einen Anschlag (66, 68) aufweist, der mit einem Anschlag (56, 58) des Gehäuses (14) im Bereich des Steuerabschnitts so zusammenwirkt, daß die Drehung des Klemmelements (16) begrenzt ist, wenn es bei einem vorgegebenen Drehwinkel seine maximale axiale Auslenkung erreicht hat.

8. Anschlag nach einem der Ansprüche 1 bis 7, **dadurch gekennzeichnet, daß** das Anschlagelement (10) einen relativ festen Kern (22) und eine elastomere Beschichtung (24) am Kopf (18) und im Bereich des Schaftes (20) aufweist, mit dem der Klemmabschnitt (60) zusammenwirkt.

9. Anschlag nach Anspruch 8, **dadurch gekennzeichnet, daß** die ringförmige Beschichtung (26) in das Material des Schaftes (22) eingebettet ist.

## Claims

1. Self-adjusting dampening stop means for moveable parts, particularly flaps, bonnets or the like for automotive vehicles comprising
a stop element (10) including a head (18) and a shank (20)
a housing (14) having means for fastening it to the part to be dampened and a receiving opening (36)
a clamping element (16) within the housing (14) which has a radially movable or deformable clamping portion (60) clampingly co-operating with the shank (20) of the stop element (10), with the shank being adapted to be inserted into the housing through the receiving opening (36)
**characterized in that** a coupling element (12) is provided which is rotatably supported by the housing (14) adjacent the receiving openings (36), the coupling elements (17) having a throughgoing opening (82) for the shank (20) of the stop element (10) and cam surfaces (86) which co-operate with the clamping portion (60) such that upon rotation of the coupling element (12) the clamping portion (60) coacts with the cam surfaces (96) and is pressed against the shank (20) in order to fixedly clamp the shank in the housing (14) against axial movement.

2. The stop means of claim 1, **characterized in that** the housing (14) has a control portion (50, 52, 54) at the end opposite to the receiving opening (36), a control portion (70, 72, 74) of the clamping element (16) which is rotatably supported in the housing (14) co-operating with the control portion of the housing such that upon rotation the clamping element (16) is axially moved, **in that** further the coupling element (12) includes a coupling portion (92) through which the clamping element (16) is rotated if the coupling elements (12) is rotated and **in that** the clamping portion (96) of the coupling element (12) is formed by a conical surface.

3. The stop means of claim 1 or 2, **characterized in that** wrench surfaces (80) are formed at the outer circumference of the coupling element (12).

4. The stop means of one of the claims 1 to 3, **characterized in that** an annular groove (86) is provided in the coupling element (12), the groove being interrupted by at least one recess (90, 92), further the housing (14) has a radial projection (38, 40) projecting into the annular groove (86) if introduced through the recess (90, 92), with one side of the annular groove (86) confined by a flange (84) which engages the outer side of housing (14).

5. The stop means of one of the claims 2 to 4, **characterized in that** the coupling portion has a plurality of axially parallel legs (92) which are positively accommodated in the space between axially parallel clamping portion (60) of the clamping element (16).

6. The stop means of one of the claims 2 to 5, **characterized in that** the control portion of the housing (14) has cam surfaces (52) which co-operate with cam surfaces (72) of clamping element (16).

7. The stop means of one of the claims 2 to 6, **characterized in that** the clamping element (16) has an abutment (66, 68) in the region of the control portion which abutment co-operates with an abutment (56,58) of housing (14) in the region of the control portion such that the rotation of clamping element (16) is stopped if the clamping element has reached a maximum axial movement upon a predetermined angle of rotation.

8. The stop means of one of the claims 1 to 7, **characterized in that** the stop element (10) has a relatively rigid core (22) which is provided with an elastomer layer (24) at head (18) thereof and in the range of shank (20) co-operating with clamping portion (60).

9. The stop means of claim 8, **characterized in that** the annular coating (26) is embedded in the material of shank (22).

## Revendications

1. Butée auto-réglée à amortissement pour éléments mobiles, en particulier pour volets, capots ou analogues dans des automobiles, avec
un élément de butée (10) qui présente une tête (18) et une tige (20),
un boîtier (14) qui présente des moyens pour la fixation sur la partie à amortir et une ouverture de logement (36),
un élément de serrage (16) dans le boîtier (14) qui présente une section de serrage (60) mobile ou déformable radialement, qui coopère en serrant avec la tige (20) de l'élément de butée (10), qui est insérable par l'intermédiaire de l'ouverture de logement (36) dans le boîtier (14),
**caractérisée en ce qu'**un élément d'entraînement (12), qui est logé dans la zone de l'ouverture de logement (36) pivotant sur le boîtier (14), présente un passage (82) pour la tige (20) de l'élément de butée (10) ainsi que des surfaces de rampe (86) qui coopèrent avec la section de serrage (60) de telle sorte qu'en cas de rotation de l'élément d'entraînement (12), la section de serrage (60) coopère avec la surface de rampe (96) et soit pressée contre la tige (20) pour serrer celle-ci axialement solidement dans le boîtier (14).

2. Butée selon la revendication 1, **caractérisée en ce que** le boîtier (14) présente, à l'extrémité opposée à l'ouverture de logement (36), une section de commande (50, 52, 54), avec laquelle une section de commande (70, 72, 74) de l'élément de serrage (16) logé pivotant dans le boîtier (14) coopère de telle sorte que l'élément de serrage (16) soit déplacé axialement en cas de rotation, l'élément d'entraînement (12) présente une section d'entraînement (92), par l'intermédiaire de laquelle l'élément de serrage (16) est soumis à une torsion lorsque l'élément d'entraînement (12) est mis en rotation et la section de rampe (96) de l'élément d'entraînement (12) est constituée d'une surface conique.

3. Butée selon la revendication 1 ou 2, **caractérisée en ce que**, sur la face extérieure de l'élément d'entraînement (12), une surface à clé (80) est formée.

4. Butée selon l'une des revendications 1 à 3, **caractérisée en ce que**, dans l'élément d'entraînement (12), une gorge annulaire (86) est prévue, qui est interrompue par au moins un évidement (90, 92), le boîtier (14) présente une partie en saillie (38, 40) radiale, qui vient en prise dans la gorge annulaire (86), lorsqu'elle est insérée par l'intermédiaire de l'évidement (90, 92), l'une des faces de la gorge annulaire (86) étant bordée par une bride (84) placée sur la face extérieure du boîtier (14).

5. Butée selon l'une des revendications 2 à 4, **caractérisée en ce que** la section d'entraînement est constituée de plusieurs jambes (92) parallèles à l'axe, qui sont disposées sensiblement par complémentarité de formes entre des sections de serrage (60) parallèles à l'axe de l'élément de serrage (16).

6. Butée selon l'une des revendications 2 à 5, **caractérisée en ce que** la section de commande du boîtier (14) présente des sections de rampe (52) qui coopèrent avec des sections de rampe (72) de l'élément de serrage (16).

7. Butée selon l'une des revendications 2 à 6, **caractérisée en ce que** l'élément de serrage (16) présente, dans la zone de la section de commande, une butée (66, 68) qui coopère avec une butée (56, 58) du boîtier (14) dans la zone de la section de commande de telle sorte que la rotation de l'élément de serrage (16) soit limitée lorsqu'il a atteint, pour un angle de rotation prédéterminé, sa déviation axiale maximale.

8. Butée selon l'une des revendications 1 à 7, **caractérisée en ce que** l'élément de butée (10) présente un noyau (22) relativement résistant et un revêtement élastomère (24) sur la tête (18) et dans la zone de la tige (20), avec laquelle la section de serrage (60) coopère.

9. Butée selon la revendication 8, **caractérisée en ce que** le revêtement (26) en forme d'anneau est inséré dans le matériau de la tige (22).
